# EUROPEAN PATENT APPLICATION

(11) **EP 4 691 920 A1**
(43) Date of publication of application: **11.02.2026**
(21) Application number: 23930301.9
(22) Date of filing: 27.03.2023
(51) Int. Cl.: B64F 1/305

(54) **PASSENGER BOARDING BRIDGE**

(71) Applicant: ShinMaywa Industries, Ltd., Takarazuka-shi, Hyogo 665-8550 (JP)
(72) Inventor: SHIMOMORI, Wataru, Hyogo, 665-8550 (JP)
(74) Representative: Dehns
(86) International application number: PCT/JP2023/012242
(87) International publication number: WO 2024/201661

(57) **Abstract**

Provided is a passenger boarding bridge that makes it possible to achieve labor savings. One example of the passenger boarding bridge according to the present invention includes: a rotunda (4) connected to a terminal building; a tunnel unit (5) connected to the rotunda (4); a cab (6) connected to the tunnel unit (5); a mover that moves the cab (6); a controller that performs control in a first control mode and a second control mode, the first control mode being a mode in which, based on an operation signal, the controller controls the mover to move the cab (6) to an intended position, the second control mode being a mode in which the controller controls the mover such that the cab (6) that has been docked to an entrance of an aircraft (3) moves in a manner to follow upward/downward movement of the entrance; a partitioning member that is installed on a walkway of at least one of the cab (6) or the rotunda (4) and that opens and closes the walkway; and an opening/closing device that opens and closes the partitioning member. When the control enters the first control mode, the controller controls the opening/closing device to bring the partitioning member into a closed state, and when the control enters the second control mode, the controller controls the opening/closing device to bring the partitioning member into an opened state.

## Description

### Technical Field

The present invention relates to a passenger boarding bridge.

### Background Art

At an airport, a passenger boarding bridge is often used as a walkway from a terminal building to an aircraft. The passenger boarding bridge includes: a rotunda connected to the terminal building; a cab to be docked to and undocked from an entrance of the aircraft; a tunnel unit that connects between the rotunda and the cab, the tunnel unit being extendable and retractable in its longitudinal direction; and so forth.

Patent Literature 1 describes that the interior of the cab is segmented into a circular room and a connection room. In the circular room, an operating panel is installed. The connection room is to be docked to and undocked from the entrance of the aircraft. The circular room and the connection room are partitioned from each other by a partitioning member such as a shutter. Such a partitioning member can be opened and closed, and by bringing the partitioning member into a closed state, rainwater or the like can be prevented from entering the inside of the circular room.

### Citation List

### Patent Literature

PTL 1: Japanese Laid-Open Patent Application Publication No. 2007-38853

### Summary of Invention

### Technical Problem

When the cab has been docked to the aircraft, the partitioning member is brought into an opened state, which allows passengers and others to pass through. Also, at the time of docking the cab to the aircraft and at the time of undocking the cab from the aircraft, the partitioning member is brought into the closed state to prevent a situation where a person enters the connection room on the distal end side of the cab by mistake and falls from the connection room. That is, with the partitioning member, the walkway in the passenger boarding bridge can be closed and opened.

Incidentally, in recent years, it has been proposed to remotely operate a passenger boarding bridge from a central monitoring room or the like. In terms of labor savings, manually controlled opening and closing, or hand-operated opening and closing, of the aforementioned partitioning member, with which the walkway can be closed or opened, is not preferable.

The present invention has been made to solve the above-described problems, and an object of the present invention is to provide a passenger boarding bridge that makes it possible to achieve labor savings.

### Solution to Problem

In order to achieve the above object, a passenger boarding bridge according to a first aspect of the present invention includes: a rotunda connected to a terminal building, the rotunda including a walkway therein; a tunnel unit whose proximal end is connected to the rotunda, the tunnel unit being configured to be extendable and retractable in a longitudinal direction of the tunnel unit, the tunnel unit including a walkway therein; a cab connected to a distal end of the tunnel unit, the cab including a distal end part to be docked to and undocked from an entrance of an aircraft, the cab further including a walkway therein; a mover that moves the cab; a controller that performs control in a first control mode and a second control mode, the first control mode being a mode in which, based on an operation signal resulting from an operation by an operator, the controller controls the mover to move the cab to an intended position, the second control mode being a mode in which the controller controls the mover such that the cab that has been docked to the entrance of the aircraft moves in a manner to follow upward/downward movement of the entrance of the aircraft; a partitioning member installed on the walkway of at least one of the cab or the rotunda, wherein when the partitioning member is in an opened state, the partitioning member opens the walkway, and when the partitioning member is in a closed state, the partitioning member closes the walkway; and an opening/closing device that opens and closes the partitioning member. When the control enters the first control mode, the controller controls the opening/closing device to bring the partitioning member into the closed state. When the control enters the second control mode, the controller controls the opening/closing device to bring the partitioning member into the opened state.

Since the above configuration includes the opening/closing device, which opens and closes the partitioning member, it is not necessary to manually open or close the partitioning member. When the first control mode is entered, the opening/closing device is controlled to bring the partitioning member into the closed state, whereas when the second control mode is entered, the opening/closing device is controlled to bring the partitioning member into the opened state. Therefore, it is not necessary to perform an operation to open or close the partitioning member. This makes it possible to achieve labor savings. When the first control mode is entered, in which the cab can be moved to dock the cab to and undock the cab from the entrance of the aircraft, the partitioning member is brought into the closed state to close the walkway. Accordingly, in a case where the partitioning member is installed on the walkway of the cab, if a person is present in the passenger boarding bridge, the following situation can be prevented from occurring: the person enters the distal end side of the cab by mistake and falls from the cab. Further, in a case where the partitioning member is installed on the walkway of the rotunda, the following situation can be prevented from occurring: when the cab of the passenger boarding bridge is being moved, a person enters the inside of that passenger boarding bridge.

A passenger boarding bridge according to a second aspect is configured such that the passenger boarding bridge according to the first aspect further includes: an opened/closed state detector that detects the opened state and the closed state of the partitioning member; and a human detector that detects a person within a predetermined range including an installation position of the partitioning member. Immediately after the controller in the first control mode has controlled the opening/closing device to bring the partitioning member into the closed state, if a person is detected by the human detector when the opened/closed state detector has not detected the closed state of the partitioning member, the controller controls the opening/closing device to bring the partitioning member into the opened state, whereas if a person is detected by the human detector after the opened/closed state detector has detected the closed state of the partitioning member, the controller maintains the closed state of the partitioning member.

According to this configuration, in a case where a person is detected by the human detector when the partitioning member is in the process of being closed, the opening/closing device is controlled to bring the partitioning member into the opened state. This makes it possible to prevent a situation where the person comes into contact with or gets caught in the partitioning member.

A passenger boarding bridge according to a third aspect is configured such that, in the passenger boarding bridge according to the first or second aspect, upon receiving a mode control canceling signal to cancel control of the opening/closing device that is based on the first control mode, the controller cancels the control of the opening/closing device that is based on the first control mode, then receives an opening/closing operation signal to open or close the partitioning member, and controls the opening/closing device based on the received opening/closing operation signal; and upon receiving a mode control canceling signal to cancel control of the opening/closing device that is based on the second control mode, the controller cancels the control of the opening/closing device that is based on the second control mode, then receives an opening/closing operation signal to open or close the partitioning member, and controls the opening/closing device based on the received opening/closing operation signal.

According to the above configuration, for example, an operating unit capable of transmitting a mode control canceling signal and an opening/closing operation signal to open or close the partitioning member to the controller may be installed in the cab of the passenger boarding bridge or may be installed in remote operation equipment with which to remotely operate the passenger boarding bridge, and by operating the operating unit, an operation to open or close the partitioning member can be performed regardless of the first control mode and the second control mode.

A passenger boarding bridge according to a fourth aspect is configured such that, in the passenger boarding bridge according to any one of the first to third aspects, upon receiving a forced opening/closing signal that gives an instruction to forcibly open or close the partitioning member, the controller controls the opening/closing device based on the forced opening/closing signal regardless of the first control mode and the second control mode.

According to this configuration, for example, an operating unit capable of transmitting a forced opening/closing signal to the controller may be installed at a suitable location outside the passenger boarding bridge, for example, on a counter at a boarding gate. During the second control mode, when a suspicious person is trying to enter the inside of the passenger boarding bridge, by operating the operating unit, the partitioning member can be closed, which makes it possible to prevent the suspicious person from entering the passenger boarding bridge or the aircraft.

A passenger boarding bridge according to a fifth aspect is configured such that, in the passenger boarding bridge according to any one of the first to fourth aspects, an interior of the cab is segmented into an outdoor region and an indoor region, the outdoor region being located on a distal end part side of the cab, the indoor region being located on a tunnel unit side of the cab; the cab includes an opening via which the outdoor region and the indoor region communicate with each other and that serves as the walkway; and the partitioning member is installed at the opening of the cab.

According to this configuration, at the time of docking the cab to the aircraft, and at the time of undocking the cab from the aircraft, the first control mode is entered and the partitioning member installed on the cab is brought into the closed state, which makes it possible to prevent a person from entering the outdoor region on the distal end side of the cab by mistake and falling therefrom. Moreover, by bringing the partitioning member installed on the cab into the closed state, the outdoor region and the indoor region of the cab can be partitioned off from each other, which makes it possible to prevent rainwater or the like from entering the indoor region.

A passenger boarding bridge according to a sixth aspect is configured such that, in the passenger boarding bridge according to any one of the first to fifth aspects, the rotunda includes an opening that faces the terminal building and that serves as the walkway; and the partitioning member is installed at the opening of the rotunda.

According to the above configuration, at the time of docking the cab to the aircraft and at the time of undocking the cab from the aircraft, the first control mode is entered and the partitioning member installed on the rotunda is brought into the closed state, which makes it possible to prevent a person from entering the inside of the passenger boarding bridge by mistake.

A passenger boarding bridge according to a seventh aspect is configured such that, in the passenger boarding bridge according to the first aspect, an interior of the cab is segmented into an outdoor region and an indoor region, the outdoor region being located on a distal end part side of the cab, the indoor region being located on a tunnel unit side of the cab; the cab includes an opening via which the outdoor region and the indoor region communicate with each other and that serves as the walkway; the rotunda includes an opening that faces the terminal building and that serves as the walkway; and the partitioning member is installed at the opening of the cab and at the opening of the rotunda, the passenger boarding bridge further including: an image capturer that is installed on the rotunda and that captures, from inside of the rotunda, an image of an interior of the terminal building via the opening of the rotunda; and an image determiner that analyzes the image captured by the image capturer and that determines whether or not there is a suspicious person coming toward the rotunda. During the second control mode, if the image determiner determines that there is a suspicious person coming toward the rotunda, the controller controls the opening/closing device such that the partitioning member in the opened state is brought into the closed state.

According to the above configuration, if there is a suspicious person coming toward the rotunda from the inside of the terminal building, the opening/closing device is controlled to bring the partitioning member into the closed state. This makes it possible to prevent the suspicious person from entering the passenger boarding bridge or the aircraft.

### Advantageous Effects of Invention

The present invention is configured as described above, and has an advantage of being able to provide a passenger boarding bridge that makes it possible to achieve labor savings.

The above object, other objects, features, and advantages of the present invention will be made clear by the following detailed description of preferred embodiments with reference to the accompanying drawings.

### Brief Description of Drawings

FIG. 1 shows a schematic plan view showing one example of a passenger boarding bridge according to one embodiment of the present invention.
FIG. 2 is a side view schematically showing the passenger boarding bridge.
FIG. 3 is a side view showing one example of a state where a cab is docked to an aircraft.
FIG. 4 is a view showing a cab distal end part to be docked to the aircraft, the view being taken from the aircraft side.
FIG. 5 is a schematic plan view showing the distal end of the cab and the vicinity thereof.
FIG. 6 is a schematic side view of a rotunda and the vicinity thereof.
FIG. 7 schematically shows an electric roll screen installed on the rotunda as seen from the inside of the rotunda.
FIG. 8 is a block diagram schematically showing a control system of the passenger boarding bridge.
FIG. 9 is a flowchart schematically showing one example of processing by a controller of the passenger boarding bridge in the case of docking and undocking the passenger boarding bridge to and from the aircraft by automatic driving that is performed by remote operation.
FIG. 10 is a flowchart schematically showing one example of processing by the controller of the passenger boarding bridge in the case of docking and undocking the passenger boarding bridge to and from the aircraft by automatic driving that is performed by remote operation.
FIG. 11 is a flowchart schematically showing one example of processing by the controller of the passenger boarding bridge in the case of docking and undocking the passenger boarding bridge to and from the aircraft by automatic driving that is performed by remote operation.

### Description of Embodiments

Hereinafter, a preferred embodiment of the present invention is described with reference to the drawings. In the drawings, the same or corresponding elements are denoted by the same reference signs, and repeating the same descriptions is avoided below. The drawings show each component schematically in order to facilitate the understanding thereof. Therefore, in some cases, the drawings may not display accurate shapes, accurate dimensional ratios, etc. The present invention is not limited to the embodiment described below.

### (Embodiment)

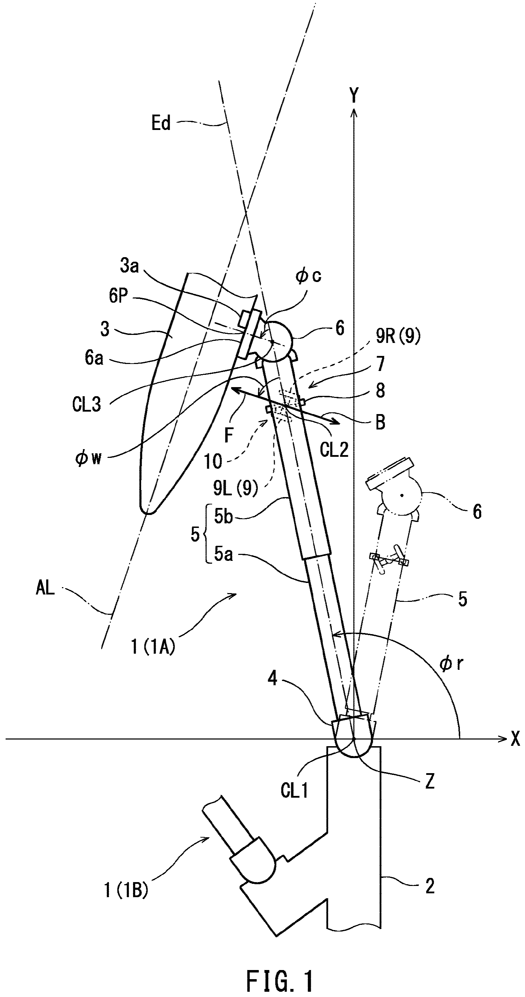

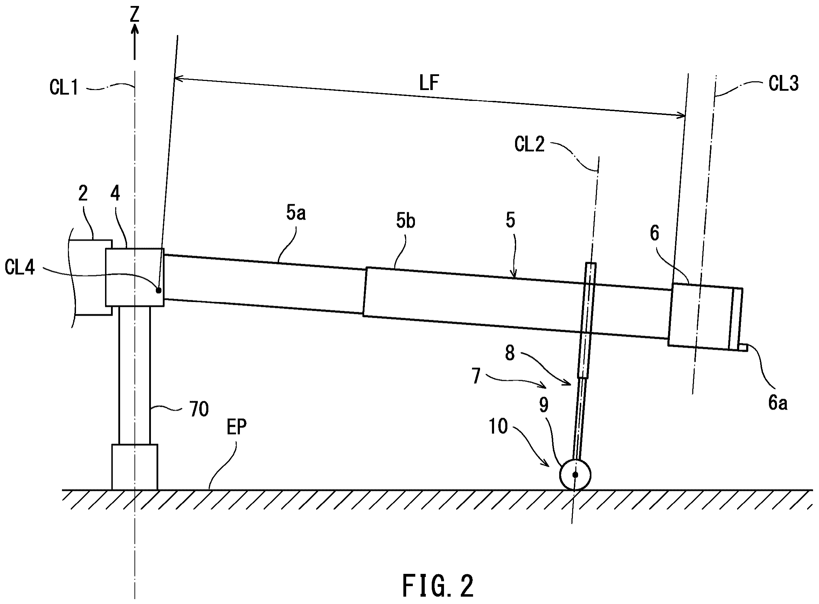

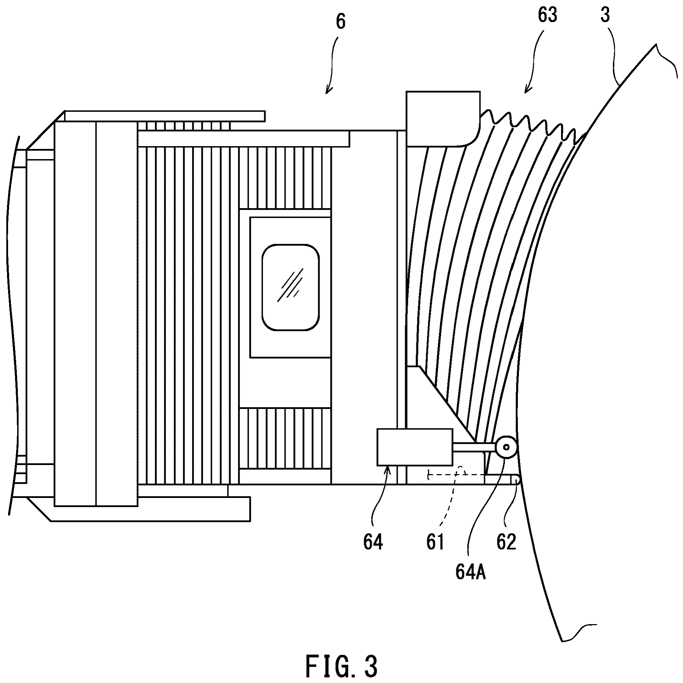

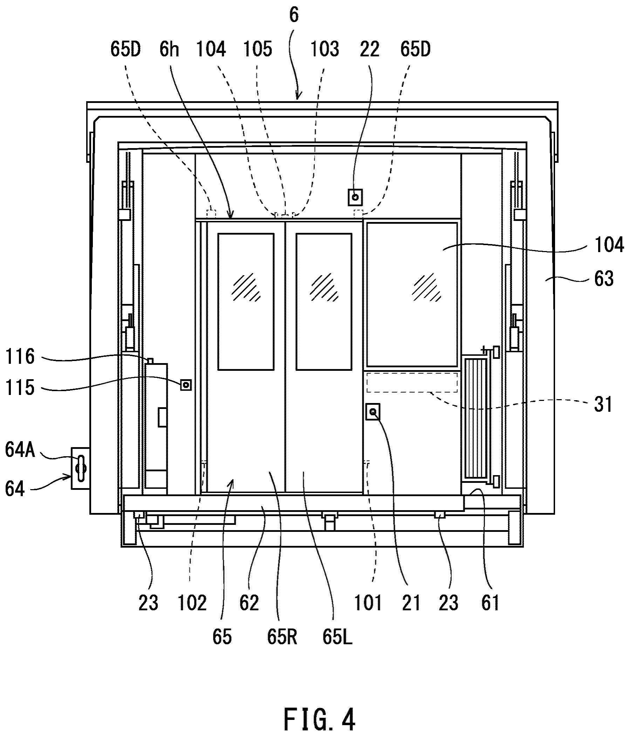

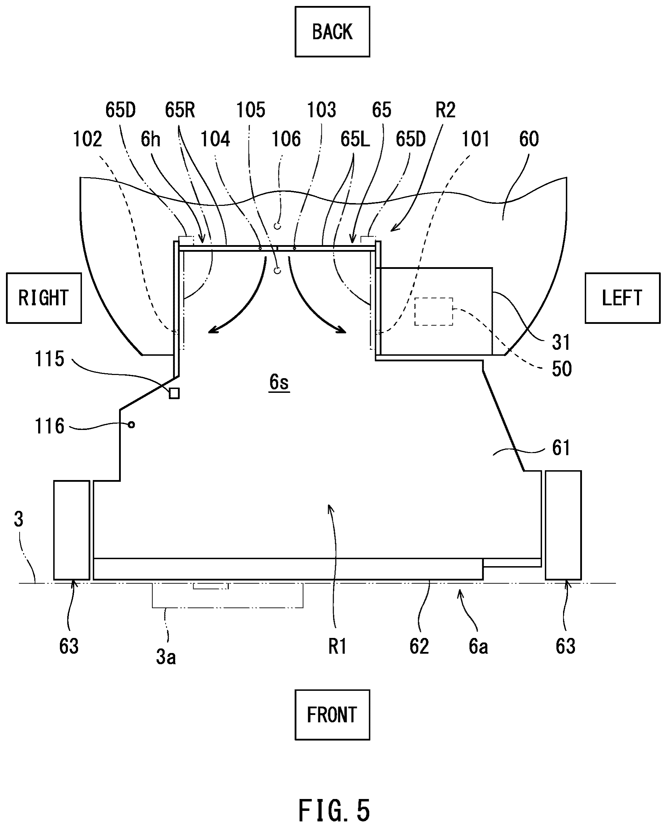

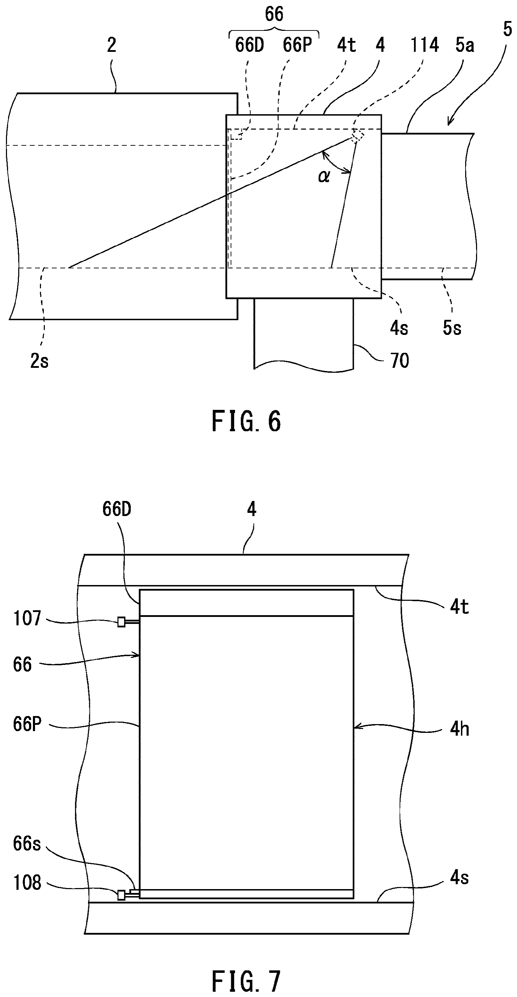

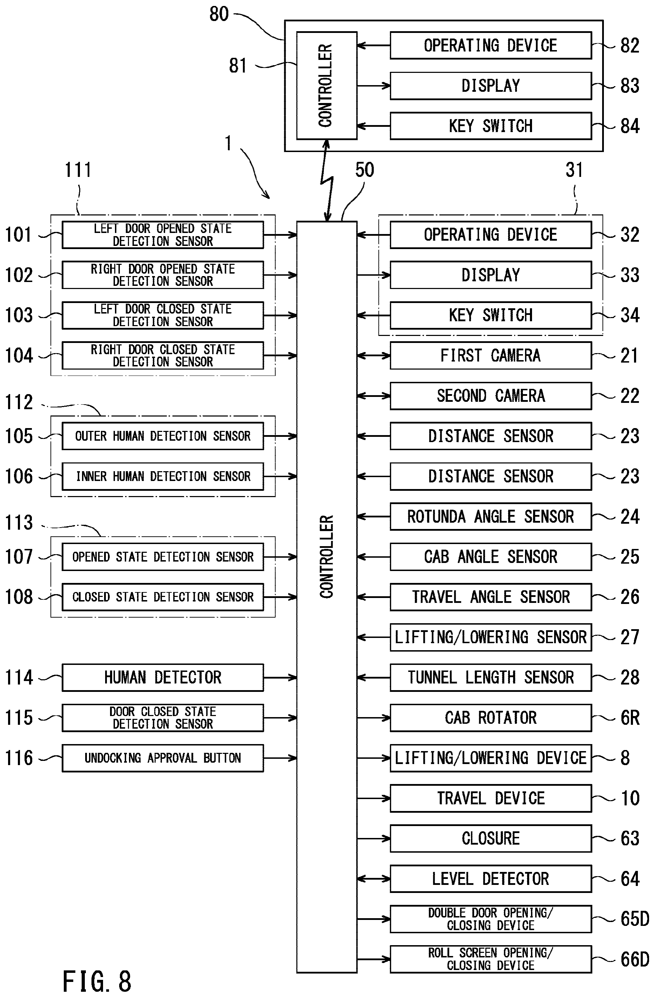

FIG. 1 is a schematic plan view showing one example of a passenger boarding bridge according to the present embodiment. FIG. 2 is a schematic side view of the passenger boarding bridge. FIG. 3 is a side view showing one example of a state where a cab is docked to an aircraft. FIG. 4 is a front view of a cab distal end part to be docked to the aircraft (the front view is taken from the aircraft side). FIG. 5 is a schematic plan view showing the distal end of the cab and the vicinity thereof. FIG. 6 is a schematic side view of a rotunda and the vicinity thereof. FIG. 7 schematically shows an electric roll screen installed on the rotunda as seen from the inside of the rotunda. FIG. 8 is a block diagram schematically showing a control system of the passenger boarding bridge.

As shown in FIG. 1, there is a case where a plurality of passenger boarding bridges 1 (1A and 1B) are installed on a fixed bridge 2, which is connected to one boarding gate of a terminal building. The plurality of passenger boarding bridges 1A and 1B have fundamentally the same configuration. In the description herein, the passenger boarding bridge 1A is described as a representative example.

The passenger boarding bridge 1 (1A) includes: a horizontally rotatable rotunda 4 connected to an entrance of the fixed bridge 2 of the terminal building; a tunnel unit 5, whose proximal end is connected to the rotunda 4, the tunnel unit 5 being configured to be extendable and retractable in its longitudinal direction; a cab 6 provided at the distal end of the tunnel unit 5 in such a manner that the cab 6 is rotatable in regular and reverse directions; and a drive column 7.

The rotunda 4 is supported by a support pillar 70, such that the rotunda 4 is rotatable in regular and reverse directions about a rotational axis (vertical axis) CL1.

The tunnel unit 5 forms a passenger walkway, and includes a plurality of tubular tunnels 5a and 5b, which are fitted together in a nested manner, such that the tunnel unit 5 is extendable and retractable in the longitudinal direction thereof. In the description herein, the tunnel unit 5 is formed by the two tunnels 5a and 5b as one example. The tunnel unit 5 is formed by at least two tunnels. The proximal end of the tunnel unit 5 is connected to the rotunda 4 in such a manner that the proximal end of the tunnel unit 5 is swingable about a rotational axis CL4 (see FIG. 2), which extends horizontally within the rotunda 4. That is, the tunnel unit 5 is connected to the rotunda 4 in such a manner that the tunnel unit 5 is liftable and lowerable.

The drive column 7, which serves as a support leg, is mounted to the distal-side part of the tunnel unit 5 (specifically, the tunnel 5b, which is the frontmost tunnel). It should be noted that the drive column 7 may be mounted to the cab 6.

The drive column 7 is provided with a lifting/lowering device 8, which lifts and lowers the cab 6 and the tunnel unit 5. The lifting/lowering device 8 includes, for example, a pair of extendable and retractable support pillars, which supports the tunnel unit 5. The tunnel unit 5 can be lifted/lowered by extension/retraction of the pair of support pillars. Accordingly, the cab 6 and the tunnel unit 5 can be swung vertically with respect to the rotunda 4.

The drive column 7 is further provided with a travel device 10 including two travel wheels 9 (a right wheel 9R and a left wheel 9L), which are drivable to rotate independently of each other in regular and reverse directions. The travel device 10 is provided under the lifting/lowering device 8. The travel device 10 is configured to travel forward (travel in an arrow F direction) and travel backward (travel in an arrow B direction) by rotation of the two travel wheels 9. The travel device 10 is also configured to be rotatable in regular and reverse directions about a rotational axis CL2, and thereby the travel direction of the travel device 10 is changeable. By causing the travel device 10 (the travel wheels 9) to travel on an apron EP, the tunnel unit 5 can be rotated about the rotational axis CL1 of the rotunda 4 and can be extended/retracted.

The cab 6 is provided at the distal end of the tunnel unit 5. The cab 6 is configured to be rotatable, by a cab rotator 6R (see FIG. 8), in regular and reverse directions about a rotational axis CL3, which is perpendicular to the floor surface of the cab 6.

In the present embodiment, the travel device 10, the lifting/lowering device 8, and the cab rotator 6R serve as a mover that moves the cab 6.

As shown in FIG. 3, a closure 63 is provided at the distal end part of the cab 6. The closure 63 includes a bellows portion that is expandable and contractible in the front-back direction. By docking the cab 6 to an aircraft 3 and expanding the bellows portion forward, the front end of the bellows portion can be brought into contact with the aircraft 3 around a door 3a thereof.

A level detector 64 is mounted on an outer side wall of the cab 6. The level detector 64 is a device configured to detect the amount of relative upward/downward movement of the entrance (the door 3a) of the aircraft 3 with respect to the cab 6 when the entrance of the aircraft 3 moves upward/downward due to, for example, boarding/disembarking of passengers or loading/unloading of cargo after the cab 6 is docked to the aircraft 3. When the level detector 64 is operated, a wheel 64A moves forward to come into contact with the surface of the fuselage of the aircraft 3. The wheel 64A rotates when the entrance of the aircraft 3 moves upward or downward. Based on the direction and angle of the rotation of the wheel 64A, the level detector 64 detects the amount of upward/downward movement of the entrance of the aircraft 3, and if the detected amount of the upward/downward movement of the entrance of the aircraft 3 is greater than or equal to a predetermined amount, outputs the detected amount of the upward/downward movement to a controller 50. Based on the detected amount of the upward/downward movement, the controller 50 controls the lifting/lowering device 8 of the drive column 7, such that the cab 6 moves in a manner to follow the upward/downward movement of the entrance of the aircraft 3.

In this example, the rotunda 4 is configured to rotate together with the tunnel unit 5. Alternatively, the tunnel unit 5 may be configured to rotate with respect to the rotunda 4 about the rotational axis CL1 in a state where the rotunda 4 is fixed. Further, in this example, the entire cab 6 is configured to rotate with respect to the tunnel unit 5. Alternatively, only the distal-side part of the cab 6, which is to be docked to the aircraft 3 and which includes the closure 63, the level detector 64, and a distal end part 6a, may be configured to rotate about the rotational axis CL3.

As shown in FIG. 3 and FIG. 4, a bumper 62 is provided at the distal end of a floor 61 of an outdoor region R1 (FIG. 5) of the cab 6 to be docked to the aircraft 3. A plurality of (in this example, two) distance sensors 23 (e.g., laser distance meters) each to measure the distance between the cab 6 and the aircraft 3 are mounted to the bumper 62, such that the distance sensors 23 are arranged in the left-right direction of the bumper 62. It should be noted that the installation positions of the distance sensors 23 are changeable as necessary. For example, the distance sensors 23 may be arranged on the floor 61 of the outdoor region R1 of the cab 6.

Further, as shown in FIG. 4, first and second cameras 21 and 22 each to capture an image of the door 3a, which serves as the entrance of the aircraft 3, are installed on the distal end part of the cab 6 at their respective recessed positions. The installation positions of these first and second cameras 21 and 22 may be changed as necessary, so long as the first and second cameras 21 and 22 are disposed away from each other and can each capture an image of the door 3a of the aircraft 3.

As shown in FIG. 4 and FIG. 5, electric double doors 65 are installed on an internal walkway 6s of the cab 6. The electric double doors 65 partition off the distal end part 6a side of the internal walkway 6s and the tunnel unit 5 side of the internal walkway 6s from each other.

As shown in FIG. 5, the interior of the cab 6 is segmented into the outdoor region R1 and an indoor region R2. The outdoor region R1 is located on the distal end part 6a side of the cab 6, and the indoor region R2 is located on the tunnel unit 5 side of the cab 6. The cab 6 includes an opening 6h, via which the outdoor region R1 and the indoor region R2 communicate with each other and which serves as the walkway 6s. The opening 6h serves also as an entrance to each of the outdoor region R1 and the indoor region R2.

The electric double doors 65 include: double doors that are left and right doors 65L and 65R installed at the opening 6h; and double door opening/closing devices 65D, which open and close the respective left and right doors 65L and 65R. Each of the opening/closing devices 65D is configured by using, for example, an electric motor. The left and right doors 65L and 65R collectively serve as a partitioning member installed on the walkway 6s of the cab 6, i.e., a first partitioning member. Hereinafter, the left and right doors 65L and 65R are occasionally referred to as the double doors 65L and 65R. When the double doors 65L and 65R are in an opened state, the opening 6h, which is part of the walkway 6s, is open, whereas when the double doors 65L and 65R are in a closed state, the opening 6h, which is part of the walkway 6s, is closed.

The cab 6 is further provided with: a left door opened state detection sensor 101, which detects an opened state of the left door 65L; a right door opened state detection sensor 102, which detects an opened state of the right door 65R; a left door closed state detection sensor 103, which detects a closed state of the left door 65L; and a right door closed state detection sensor 104, which detects a closed state of the right door 65R. These sensors 101 to 104 are arranged at suitable positions, respectively. Each of these sensors 101 to 104 can be configured by using, for example, a proximity sensor. A detection signal from each of these sensors 101 to 104 is transmitted to the controller 50. These sensors 101 to 104 collectively serve as an opened/closed state detector 111 (FIG. 8), which detects the opened state and the closed state of the double doors 65L and 65R. The opened/closed state detector 111 is a detector to detect the opened state of the double doors 65L and 65R, in which the double doors 65L and 65R are fully open, and to detect the closed state of the double doors 65L and 65R, in which the double doors 65L and 65R are fully closed.

The cab 6 further includes a human detector 112 (FIG. 8), which detects a person present within a predetermined range including the installation position of the double doors 65L and 65R (the predetermined range is, for example, about one meter range from the opening 6h). The human detector 112 includes: an outer human detection sensor 105 installed on the ceiling of the outdoor region R1 near the double doors 65L and 65R; and an inner human detection sensor 106 installed on the ceiling of the indoor region R2 near the double doors 65L and 65R. Each of these human detection sensors 105 and 106 can be configured by using, for example, an infrared sensor. Each of the human detection sensors 105 and 106, when it detects a person, transmits a detection signal to the controller 50.

On the right side of the cab 6 near the distal end part 6a, a door closed state detection sensor 115 is disposed. In a state where the cab 6 is docked to the aircraft 3, when the door 3a of the aircraft 3 is closed, the door closed state detection sensor 115 detects that the door 3a has been closed. The door closed state detection sensor 115 can be configured by using, for example, an infrared sensor. When the door 3a is in a closed state, the door closed state detection sensor 115 detects the door 3a, and transmits a door detection signal to the controller 50. Further, at a suitable position on the cab 6 near the distal end part 6a, an undocking approval button 116 is installed. When the undocking approval button 116 is pressed by, for example, a cabin crew member, an undocking approval signal is transmitted to the controller 50. The door closed state detection sensor 115 and the undocking approval button 116 are installed in the outdoor region R1 of the cab 6.

Next, an electric roll screen 66 and a human detector 114, which are installed on the rotunda 4, are described with reference to FIG. 6 and FIG. 7.

As shown in FIG. 6, a walkway 2s in the fixed bridge 2 of the terminal building, a walkway 4s in the rotunda 4, and a walkway 5s in the tunnel unit 5 are connected. The walkway 5s in the tunnel unit 5 is connected to the walkway 6s in the cab 6 (FIG. 5).

The rotunda 4 includes an opening 4h, which is positioned at the opposite side to the entrance to the tunnel unit 5. The opening 4h faces the fixed bridge 2 of the terminal building, and serves as the walkway. The opening 4h serves as an entrance between the fixed bridge 2 of the terminal building and the rotunda 4.

The electric roll screen 66 includes: a roll screen 66P installed at the opening 4h; and an opening/closing device 66D, which opens and closes the roll screen 66P. The opening/closing device 66D is configured by using, for example, an electric motor. The roll screen 66P is a partitioning member installed on the walkway 4s of the rotunda 4, i.e., a second partitioning member. The roll screen 66P is rolled up to be in an opened state, and unrolled to be in a closed state. When the roll screen 66P is in the opened state, the opening 4h, which is part of the walkway 4s, is open, whereas when the roll screen 66P is in the closed state, the opening 4h, which is part of the walkway 4s, is closed.

The rotunda 4 is provided with: an opened state detection sensor 107, which detects the opened state of the roll screen 66P; and a closed state detection sensor 108, which detects the closed state of the roll screen 66P. These sensors 107 and 108 are arranged at suitable respective positions. Each of these sensors 107 and 108 can be configured by using, for example, a limit switch.

A contact member 66s, which comes into contact with the sensors 107 and 108, is mounted to the distal end portion of the roll screen 66P. When the roll screen 66P is brought into the opened state, the contact member 66s comes into contact with the sensor 107, and the sensor 107 transmits an opened state detection signal to the controller 50. On the other hand, when the roll screen 66P is brought into the closed state, the contact member 66s comes into contact with the sensor 108, and the sensor 108 transmits a closed state detection signal to the controller 50. These sensors 107 and 108 collectively serve as an opened/closed state detector 113 (FIG. 8), which detects the opened state and the closed state of the roll screen 66P. The opened/closed state detector 113 is a detector to detect the opened state of the roll screen 66P, in which the roll screen 66P is fully open, and to detect the closed state of the roll screen 66P, in which the roll screen 66P is fully closed.

The rotunda 4 further includes, at a suitable position, the human detector 114, which detects a person present within a predetermined range including the installation position of the roll screen 66P. In this example, a camera installed on a ceiling 4t of the rotunda 4 and having AI processing functions is used as the human detector 114. If a person enters an image-capturing range α of the camera, the human detector 114 transmits a detection signal to the controller 50.

Further, as shown in FIG. 8, the passenger boarding bridge 1 is provided with: a rotunda angle sensor 24, which detects a rotational angle Φr (see FIG. 1) of the rotunda 4; a cab angle sensor 25, which detects a rotational angle Φc (see FIG. 1) of the cab 6 with respect to a center line Ed of the tunnel unit 5; a travel angle sensor 26, which detects a rotational angle Φw (an angle indicating a travel direction) (see FIG. 1) of the travel device 10 with respect to the center line Ed of the tunnel unit 5 as seen in a plan view; a lifting/lowering sensor 27, which detects the amount of lifting/lowering by the lifting/lowering device 8; and a tunnel length sensor 28, which detects the length of the tunnel unit 5 (e.g., a length LF in FIG. 2) and which is configured as, for example, a distance meter. These sensors are arranged at suitable positions, respectively.

An operating panel 31 is installed on a floor 60 in the indoor region R2 of the cab 6. The operating panel 31 includes an operating device 32, a display 33, a key switch 34, etc. The operating device 32 includes various operation switches, an operating lever, etc. With use of these, an operator can perform, for example, an operation of lifting/lowering the tunnel unit 5 and the cab 6 by the lifting/lowering device 8, an operation of rotating the cab 6 by the cab rotator 6R, and a traveling operation by the travel device 10.

Operation signals, such as an operation command based on an operation performed by the operator, are inputted from the operating device 32 to the controller 50. The controller 50 can control operations of the components of the passenger boarding bridge 1 based on the operation signals from the operating device 32. The controller 50 outputs, for example, information to be displayed on the display 33. Captured image data from each of the first and second cameras 21 and 22 is inputted to the controller 50, and also, output signals from the sensors 23 to 28 are inputted to the controller 50. As a result of the key switch 34 being operated with an operation key, an operating mode signal or an automatic leveling signal is inputted from the key switch 34 to the controller 50.

The controller 50 is disposed, for example, in the cab 6 (illustratively shown in FIG. 5) or in the frontmost tunnel 5b. The controller 50 may be configured in any manner, so long as the controller 50 has control functions. The controller 50 includes, for example, an arithmetic operation unit such as a CPU and a storage unit including a ROM, RAM, etc. A control program for operating the components of the passenger boarding bridge 1 and information necessary for the operations of the components of the passenger boarding bridge 1 are prestored in the storage unit. As a result of the arithmetic operation unit (CPU) executing the control program, the operations of the components, such as the cab rotator 6R, the lifting/lowering device 8, the travel device 10, the closure 63, the level detector 64, the double door opening/closing devices 65D, and the roll-screen opening/closing device 66D, can be controlled. Information to be stored while the passenger boarding bridge 1 is operating is also stored in the storage unit. It should be noted that the controller 50 may be configured as a single control device performing centralized control, or may be configured as a plurality of control devices performing distributed control in cooperation with each other.

It should be noted that the controller 50 can recognize, in real time, the current position of a predetermined part of the passenger boarding bridge 1 (the current position being expressed as three-dimensional position coordinates) by using, for example, a three-dimensional orthogonal coordinate system (XYZ orthogonal coordinate system) in which the intersection point of the rotational axis CL1 of the rotunda 4 and the plane of the apron EP is set as the origin, and can display the recognized current position on the display 33. The controller 50 can calculate the current position of the predetermined part of the passenger boarding bridge 1 based on, for example, values detected by the rotunda angle sensor 24, the cab angle sensor 25, the lifting/lowering sensor 27, and the tunnel length sensor 28.

The controller 50 is configured such that, for example, a controller 81 of remote operation equipment 80 installed in a central monitoring room of the terminal building and the controller 50 are communicable with each other. The communication between them may be wireless and/or wired communication, and a communication device for the communication may be installed separately. The remote operation equipment 80 includes the controller 81, an operating device 82, a display 83, a key switch 84, and so forth.

The configuration of the operating device 82 is substantially the same as that of the operating device 32 of the passenger boarding bridge 1, except that an operation to select the passenger boarding bridge 1 to be remotely operated can be performed with the operating device 82. Accordingly, an operator can enter the cab 6 of the passenger boarding bridge 1 and directly operate the passenger boarding bridge 1 by using, for example, the operating device 32 of the operating panel 31. Also, by using, for example, the operating device 82 of the remote operation equipment 80, the operator can select the passenger boarding bridge 1 to be remotely operated, and remotely operate the selected passenger boarding bridge 1.

The controller 81 of the remote operation equipment 80 and the controller 50 of the passenger boarding bridge 1 to be remotely operated transmit to and receive from each other, for example, information necessary for the remote operation of the passenger boarding bridge 1. For example, the controller 81 transmits an operation signal or the like for the passenger boarding bridge 1 (such as an automatic docking start signal or an automatic undocking start signal, which will be described below) from the operating device 82 to the controller 50 of the passenger boarding bridge 1 in accordance with an operation performed by the operator with the operating device 82. The controller 50 of the passenger boarding bridge 1 transmits, in real time, image data of images captured by, for example, the cameras 21 and 22 of the passenger boarding bridge 1 to the controller 81. The controller 50 may obtain image data of images captured by the camera used as the human detector 114, and transmit in real time the obtained image data to the controller 81.

The remote operation equipment 80 includes a camera image display (not shown) that obtains image data of images captured by, for example, the cameras 21 and 22 of the passenger boarding bridge 1 to be remotely operated and that displays the captured images in real time. It should be noted that the display 83 may be configured to double as the camera image display.

The controller 81 can obtain, from the controller 50 of the passenger boarding bridge 1 to be remotely operated, current positional information about a predetermined part of the passenger boarding bridge 1 (e.g., about a predetermined position 6P on the distal end part 6a of the cab 6, or about the center position of the travel device 10), the predetermined part being displayed on the display 33 of the passenger boarding bridge 1, and can display the obtained current positional information on the display 83.

Next, operations of the passenger boarding bridge 1 are described briefly. Before the aircraft 3 arrives at the apron, the passenger boarding bridge 1 stands by at a predetermined standby position indicated by two-dot chain line of FIG. 1. The aircraft 3 is brought to a stop while targeting at a predetermined stop position. The predetermined stop position is such a position that when the aircraft 3 is at the predetermined stop position, the aircraft axis of the aircraft 3 is on a fuselage guide line AL drawn on the apron, and the predetermined stop position is set in the extending direction of the fuselage guide line AL. Thereafter, the cab 6 moves from the standby position, and consequently, the distal end part 6a of the cab 6 gets docked to a part of the aircraft 3, the part being immediately below the door 3a. Then, after boarding or disembarking of passengers into or from the aircraft 3 is completed, at the time of undocking the cab 6 from the aircraft 3, the cab 6 returns to and stops at the standby position, and waits at the standby position until an operation of docking the cab 6 to the next aircraft is started. It should be noted that at the time of undocking the cab 6 from the aircraft 3 and returning the cab 6 to the standby position, a target position (target position coordinates) of the travel device 10 for the cab 6 to be at the standby position is prestored in the controller 50.

Operations of the passenger boarding bridge 1 as described above are realized by control performed by the controller 50. The controller 50 of the passenger boarding bridge 1 performs control in two control modes that are a first control mode and a second control mode. The first control mode is an operating mode, and the second control mode is an automatic leveling mode.

In the operating mode, in accordance with an operation performed by the operator with the operating device 32 or the operating device 82, the controller 50 receives an operation signal from the operating device 32 or 82, and based on the received operation signal, the control 50 can control the mover (the lifting/lowering device 8, the travel device 10, and the cab rotator 6R) to move the cab 6 to an intended position, and can operate the closure 63. Accordingly, in the operating mode, the controller 50 can control the mover to move the cab 6 from the predetermined standby position and dock the cab 6 to the entrance of the aircraft 3. Also in the operating mode, the controller 50 can control the mover to move the cab 6 from the state of being docked to the entrance of the aircraft 3 to the standby position.

In the automatic leveling mode, the controller 50 operates the level detector 64, and controls the operation of the mover (the lifting/lowering device 8) such that the cab 6, which has been docked to the entrance of the aircraft 3, moves in a manner to follow upward/downward movement of the entrance of the aircraft 3. That is, during boarding or disembarking of passengers into or from the aircraft 3, the control mode of the controller 50 is the automatic leveling mode.

Next, one example of a method of setting the control mode of the controller 50 is described. First, a case where the operator directly operates the passenger boarding bridge 1 by using the operating panel 31 of the passenger boarding bridge 1 is described. In this case, the operator can set the control mode of the controller 50 by inserting and turning the operation key in a key hole of the key switch 34. There are three rotational positions of the operation key to operate the key switch 34. The three positions are an off position, an operating position, and an automatic leveling position. For example, the operation key is inserted into the key hole and turned to the right from the off position to the operating position. As a result, the controller 50 receives an operating mode start signal from the key switch 34, and the controller 50 is set to the operating mode. In the case of the operating mode, by operating the operating device 32 to operate the mover of the passenger boarding bridge 1, the operator can move the cab 6 from the standby position and dock the cab 6 to the entrance of the aircraft 3. At the time, by pressing an automatic docking start button included in the operating device 32, the cab 6 can be docked to the entrance of the aircraft 3 by automatic control. Further, by operating the operating device 32 to operate the mover of the passenger boarding bridge 1, the operator can undock the cab 6 from the entrance of the aircraft 3 and return the cab 6 to the standby position. At the time, by pressing an automatic undocking start button included in the operating device 32, the cab 6 can be undocked and returned to the standby position by automatic control.

Further, when the operation key is turned from the operating position to the right to the automatic leveling position, the controller 50 receives an automatic leveling mode start signal from the key switch 34. Upon receiving the automatic leveling mode start signal, the controller 50 enters the automatic leveling mode. It should be noted that when the operation key is in the off position, the control of the mover (the lifting/lowering device 8, the travel device 10, and the cab rotator 6R) and the closure 63 by the controller 50 is stopped. That is, when the operation key is in the off position, the mover and the closure 63 cannot be operated by operating the operating device 32.

Next, a case where the operator remotely operates the passenger boarding bridge 1 by using the remote operation equipment 80 is described. In this case, after the operator has operated the operating device 82 to select the passenger boarding bridge 1 to be remotely operated, the operator can set the control mode of the controller 50 by inserting and turning an operation key in a key hole of the key switch 84. There are three rotational positions of the operation key to operate the key switch 84. The three positions are an off position, a manual driving position, and an automatic driving position. For example, the operation key is inserted into the key hole and turned to the right from the off position to the manual driving position. As a result, the controller 81 receives a manual driving start signal from the key switch 84, and the controller 81 transmits the manual driving start signal to the controller 50 of the passenger boarding bridge 1. Upon receiving the manual driving start signal, the controller 50 is set to the operating mode for manual driving. The manual driving start signal is one type of operating mode start signal. In the operating mode in this case, as a result of the operator operating the operating device 82 to operate the mover of the passenger boarding bridge 1, an operation signal is transmitted from the controller 81 to the controller 50 of the passenger boarding bridge 1. Upon receiving the operation signal, the controller 50 can move the cab 6 based on the received operation signal. The operating mode in this case is the same as the operating mode in the above-described case of directly operating the passenger boarding bridge 1. Also, by operating the operating device 82, the controller 50 can be set to the automatic leveling mode.

When the operation key is turned to the right from the manual driving position to the automatic driving position, the controller 81 receives an automatic driving start signal from the key switch 84, and the controller 81 transmits the automatic driving start signal to the controller 50 of the passenger boarding bridge 1. Upon receiving the automatic driving start signal, the controller 50 is set to the operating mode for automatic driving. The automatic driving start signal is one type of operating mode start signal. In this case, the controller 50 further receives an automatic docking start signal. Then, by automatic control, the controller 50 moves the cab 6 from the predetermined standby position and docks the cab 6 to the aircraft 3. When the cab 6 gets docked to the aircraft 3, the controller 50 automatically switches from the operating mode to the automatic leveling mode. Further, when the controller 50 determines that undocking is performable, the controller 50 automatically switches from the automatic leveling mode to the operating mode. Thereafter, upon receiving an automatic undocking start signal, by automatic control, the controller 50 undocks the cab 6 from the aircraft 3 and moves the cab 6 to the predetermined standby position.

It should be noted that when the operation key is in the off position, similar to the above-described case of directly operating the passenger boarding bridge 1, the control of the mover (the lifting/lowering device 8, the travel device 10, and the cab rotator 6R) and the closure 63 by the controller 50 is stopped. That is, when the operation key is in the off position, the mover and the closure 63 cannot be operated by operating the operating device 82.

Further, in the present embodiment, the controller 50 controls the opening/closing devices 65D and 66D for the double doors 65L and 65R and the roll screen 66P based on control modes. This is hereinafter described in detail. In the description below, the double doors 65L and 65R are occasionally referred to as a partitioning member 65LR, and the roll screen 66P is occasionally referred to as a partitioning member 66P.

Upon receiving an operating mode start signal (a first control mode start signal) from the key switch 34 of the operating panel 31 or from the remote operation equipment 80, the controller 50 enters the operating mode (first control mode). When the operating mode is entered, the controller 50 controls the opening/closing devices 65D and 66D to bring the partitioning members 65LR and 66P into the closed state. On the other hand, when the controller 50 enters the automatic leveling mode (second control mode), the controller 50 controls the opening/closing devices 65D and 66D to bring the partitioning members 65LR and 66P into the opened state. In the case of directly operating the passenger boarding bridge 1, upon receiving an automatic leveling start signal (second control mode start signal) from the key switch 34 of the operating panel 31, the controller 50 enters the automatic leveling mode. In a case where manual driving is being performed by remote operation, upon receiving an automatic leveling start signal from the remote operation equipment 80, the controller 50 enters the automatic leveling mode. In a case where automatic driving is being performed by remote operation, the controller 50 switches from the operating mode to the automatic leveling mode when the cab 6 gets docked to the entrance of the aircraft 3.

As described above, the opened/closed state of the partitioning members 65LR and 66P is controlled in accordance with the setting of the control mode of the controller 50. Each of the operating devices 32 and 82 includes, for each of the partitioning members 65LR and 66P, opening/closing operation buttons, specifically an opening operation button and a closing operation button, to control the opened/closed state of each of the partitioning members 65LR and 66P. Each of the operating devices 32 and 82 includes a mode control canceling button to cancel the control of the partitioning members 65LR and 66P that is based on the control mode. If the operator, after pressing the mode control canceling button, presses the opening operation button or the closing operation button to open or close an intended partitioning member (65LR or 66P), the controller 50 receives a mode control canceling signal and thereafter receives an opening operation signal or a closing operation signal to open or close the partitioning member. In response thereto, the controller 50 cancels the control of the partitioning members 65LR and 66P that is based on the control mode, and controls, based on the opening operation signal or the closing operation signal to open or close the partitioning member (65LR or 66P), the opening/closing device(s) (65D or 66D) to bring the partitioning member into the opened state or the closed state. It should be noted that the mode control canceling button may be provided for each of the partitioning member 65LR and the partitioning member 66P.

When the controller 50 is neither in the operating mode nor in the automatic leveling mode, i.e., when the operation key is in the off position and the control of the mover and the closure 63 is stopped, pressing the mode control canceling button is unnecessary, and by pressing the opening operation button or the closing operation button to open or close an intended partitioning member (65LR or 66P), the controller 50 can be caused to control the opening/closing device(s) (65D or 66D) to bring the partitioning member into the opened state or the closed state.

For example, in a case where a plurality of passenger boarding bridges 1 are installed on the fixed bridge 2 connected to one boarding gate of the terminal building as shown in FIG. 1, it is possible that not all of the passenger boarding bridges 1 are used depending on, for example, the number of entrance doors of an arriving aircraft. In this case, for example, the operator operating the remote operation equipment 80 presses the closing operation button for the partitioning member 66P installed on the rotunda 4 of the unused passenger boarding bridge 1 to bring the partitioning member 66P into the closed state. This makes it possible to prevent passengers from entering the unused passenger boarding bridge 1. Conventionally, in order to prevent passengers from entering an unused passenger boarding bridge, ground staff needed to guide the passengers or to put a guide signboard or barricade in front of an entrance of the unused passenger boarding bridge. Compared to such a case, labor savings can be achieved.

### [Automatic Driving by Remote Operation]

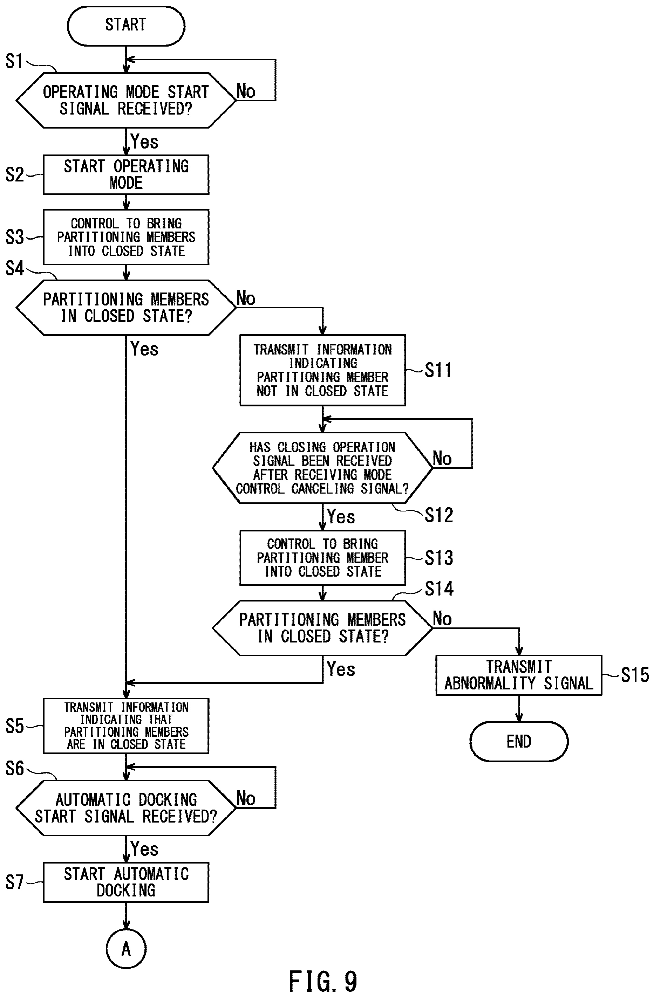

Next, a case where the passenger boarding bridge 1 is docked to and undocked from the aircraft 3 by automatic driving that is performed by remote operation is described, including the description of the control of the partitioning members 65LR and 66P. FIG. 9 to FIG. 11 are flowcharts schematically showing one example of processing by the controller 50 of the passenger boarding bridge 1 in the case of docking and undocking the passenger boarding bridge 1 to and from the aircraft 3 by automatic driving that is performed by remote operation.

The operator operates the operating device 82 of the remote operation equipment 80 to select the passenger boarding bridge 1 to be remotely operated, and then inserts and turns the operation key in the key hole of the key switch 84 of the remote operation equipment 80 to the automatic driving position. In response thereto, the controller 81 transmits an automatic driving start signal to the controller 50 of the passenger boarding bridge 1 to be remotely operated.

Upon receiving the automatic driving start signal (operating mode start signal) (Yes in step S1), the controller 50 starts the operating mode (step S2) and controls the opening/closing devices 65D and 66D to bring the partitioning members 65LR and 66P into the closed state (step S3).

After step S3, after an elapse of a predetermined time that is set in consideration of a time required for opening/closing of the partitioning members 65LR and 66P, the controller 50 determines whether or not the partitioning members 65LR and 66P are in the closed state based on detection signals from the opened/closed state detectors 111 and 113 (step S4).

If it is determined in step S4 that both the partitioning members 65LR and 66P are in the closed state (Yes in step S4), the controller 50 transmits, to the controller 81 of the remote operation equipment 80, information indicating that both the partitioning members 65LR and 66P are in the closed state (step S5). Upon receiving the information, the controller 81 displays, on the display 83, the information indicating that both the partitioning members 65LR and 66P are in the closed state. Having confirmed the information, the operator presses the automatic docking start button of the operating device 82. In response to this operation, the controller 81 transmits an automatic docking start signal to the controller 50.

Upon receiving the automatic docking start signal (Yes in step S6), the controller 50 starts automatic docking (step S7).

If it is determined in step S4 that the partitioning member 65LR or 66P is not in the closed state (No in step S4), the controller 50 transmits, to the controller 81 of the remote operation equipment 80, information indicating the partitioning member that is not in the closed state (step S11). Upon receiving the information, the controller 81 displays, on the display 83, the information indicating the partitioning member that is not in the closed state. Having confirmed the information, the operator presses the mode control canceling button of the operating device 82, and thereafter presses the closing operation button for the partitioning member that is not in the closed state. When the mode control canceling button of the operating device 82 is pressed, the controller 81 transmits a mode control canceling signal to the controller 50, and when the closing operation button for the partitioning member is pressed, the controller 81 transmits a closing operation signal for the partitioning member to the controller 50.

After receiving the mode control canceling signal, upon receiving the closing operation signal for the partitioning member that is not in the closed state (Yes in step S12), the controller 50 controls the opening/closing device(s) (65D or 66D) for the partitioning member that is not in the closed state to bring the partitioning member into the closed state (step S13).

After step S13, after an elapse of the predetermined time, the controller 50 determines whether or not the partitioning members 65LR and 66P are in the closed state based on detection signals from the opened/closed state detectors 111 and 113 (step S14), and in a case where both the partitioning members 65LR and 66P are in the closed state (Yes in step S14), activates control of the partitioning members 65LR and 66P that is based on the control mode, and proceeds to a process in step S5.

If it is determined in step S14 that the partitioning member 65LR or 66P is not in the closed state (No in step S14), the controller 50 transmits, to the controller 81 of the remote operation equipment 80, an abnormality signal indicating that there is an abnormality in the partitioning member that is not in the closed state (step S15). Upon receiving the abnormality signal, the controller 81 notifies that there is an abnormality in the partitioning member. At the time, the controller 81 may perform the abnormality notification by displaying the abnormality on the display 83, or by outputting an audio message indicating the abnormality from a speaker (not shown) included in the remote operation equipment 80.

As previously described, in step S7, the controller 50 starts automatic docking. In the case of moving the cab 6 from the standby position and docking the distal end part 6a of the cab 6 to the door 3a (to be exact, around the door 3a) of the aircraft 3 by automatic docking, i.e., by automatic control, for example, the controller 50 captures images of the door 3a of the aircraft 3 by the cameras 21 and 22 installed on the cab 6, recognizes the three-dimensional position of the door 3a from these captured images and so forth, and calculates a position (docking position) at which the distal end part 6a of the cab 6 is to be docked to the aircraft 3.

Then, the controller 50 controls the travel device 10, the lifting/lowering device 8, and the cab rotator 6R to move the distal end part 6a of the cab 6 to the aforementioned docking position. It should be noted that the docking position may be calculated before starting to move the cab 6 and while moving the cab 6, i.e., may be calculated multiple times. The docking position may be calculated by additionally using detection values from the distance sensors 23.

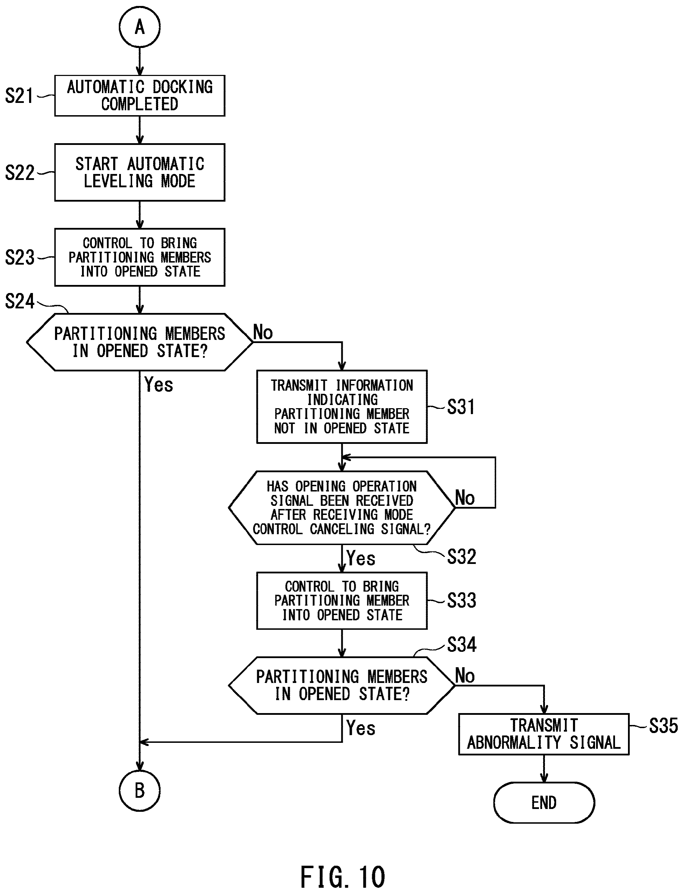

Next, the controller 50 causes the closure 63 to extend such that the bellows portion expands to come into contact with the aircraft 3, and thus, the docking of the cab 6 to the aircraft 3 is completed (step S21 in FIG. 10).

When the automatic docking is completed, the controller 50 ends the operating mode, and starts the automatic leveling mode (step S22) to control the opening/closing devices 65D and 66D to bring the partitioning members 65LR and 66P into the opened state (step S23). When the partitioning members 65LR and 66P have been brought into the opened state, the door 3a of the aircraft 3 is opened, which makes it possible for passengers to pass through the inside of the passenger boarding bridge 1.

After step S23, after an elapse of the predetermined time that is set in consideration of the time required for opening/closing of the partitioning members 65LR and 66P, the controller 50 determines whether or not the partitioning members 65LR and 66P are in the opened state based on detection signals from the opened/closed state detectors 111 and 113 (step S24).

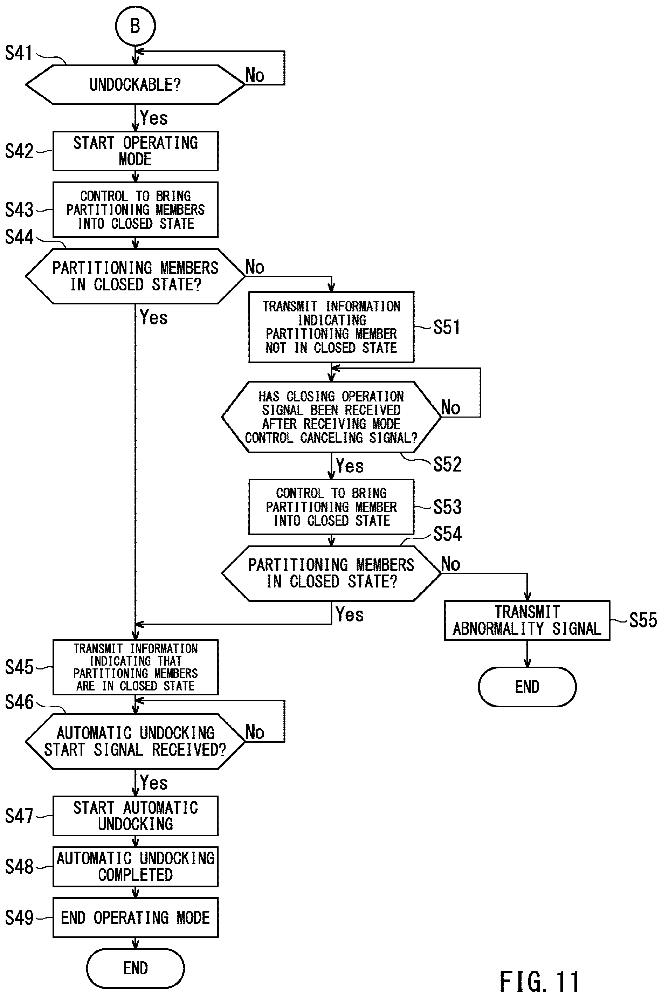

If it is determined in step S24 that both the partitioning members 65LR and 66P are in the opened state (Yes in step S24), the controller 50 proceeds to a process in step S41 (FIG. 11).

If it is determined in step S24 that the partitioning member 65LR or 66P is not in the opened state (No in step S24), the controller 50 transmits, to the controller 81 of the remote operation equipment 80, information indicating the partitioning member that is not in the opened state (step S31). Upon receiving the information, the controller 81 displays, on the display 83, the information indicating the partitioning member that is not in the opened state. Having confirmed the information, the operator presses the mode control canceling button of the operating device 82, and thereafter presses the opening operation button for the partitioning member that is not in the opened state. When the mode control canceling button of the operating device 82 is pressed, the controller 81 transmits a mode control canceling signal to the controller 50, and when the opening operation button for the partitioning member is pressed, the controller 81 transmits an opening operation signal for the partitioning member to the controller 50.

After receiving the mode control canceling signal, upon receiving the opening operation signal for the partitioning member that is not in the opened state (Yes in step S32), the controller 50 controls the opening/closing device(s) (65D or 66D) for the partitioning member that is not in the opened state to bring the partitioning member into the opened state (step S33).

After step S33, after an elapse of the predetermined time, the controller 50 determines whether or not the partitioning members 65LR and 66P are in the opened state based on detection signals from the opened/closed state detectors 111 and 113 (step S34), and in a case where both the partitioning members 65LR and 66P are in the opened state (Yes in step S34), activates control of the partitioning members 65LR and 66P that is based on the control mode, and proceeds to a process in step S41 (FIG. 11).

If it is determined in step S34 that the partitioning member 65LR or 66P is not in the opened state (No in step S34), the controller 50 transmits, to the controller 81 of the remote operation equipment 80, an abnormality signal indicating that there is an abnormality in the partitioning member that is not in the opened state (step S35). Upon receiving the abnormality signal, the controller 81 notifies that there is an abnormality in the partitioning member. At the time, the controller 81 may perform the abnormality notification by displaying the abnormality on the display 83, or by outputting an audio message indicating the abnormality from a speaker (not shown) included in the remote operation equipment 80.

In step S41, the controller 50 determines whether or not the cab 6 is undockable from the aircraft 3. Here, for example, after an undocking approval signal is received as a result of the undocking approval button 116 of the cab 6 being pressed by a cabin crew member of the aircraft 3, the controller 50 may determine that the cab 6 is undockable from the aircraft 3 when the closed state of the door 3a of the aircraft 3 is detected based on a door detection signal from the door closed state detection sensor 115. In a case where the undocking approval button 116 is absent, the controller 50 may determine that the cab 6 is undockable from the aircraft 3, for example, when the closed state of the door 3a of the aircraft 3 is detected based on the door detection signal from the door closed state detection sensor 115. In this example, the controller 50, together with the door closed state detection sensor 11, serves as a door closed state detector. Regardless of the presence or absence of the undocking approval button 116, when the door detection signal has been continuously received from the door closed state detection sensor 115 for a predetermined time, the controller 50 may determine that the closed state of the door 3a of the aircraft 3 has been detected. It should be noted that, in this example, the door closed state detection sensor 115 is used to detect the closed state of the door 3a of the aircraft 3. Instead of or in addition to this, the cameras 21 and 22, each of which captures an image of the door 3a, may be used, and the images captured by the cameras 21 and 22 may be analyzed to detect the closed state of the door 3a.

If it is determined in step S41 that the cab 6 is undockable from the aircraft 3, the controller 50 ends the operation of the level detector 64 to end the automatic leveling mode, starts the operating mode (step S42), and controls the opening/closing devices 65D and 66D to bring the partitioning members 65LR and 66P into the closed state (step S43).

After step S43, after an elapse of the predetermined time that is set in consideration of the time required for opening/closing of the partitioning members 65LR and 66P, the controller 50 determines whether or not the partitioning members 65LR and 66P are in the closed state based on detection signals from the opened/closed state detectors 111 and 113 (step S44).

If it is determined in step S44 that both the partitioning members 65LR and 66P are in the closed state (Yes in step S44), the controller 50 transmits, to the controller 81 of the remote operation equipment 80, information indicating that both the partitioning members 65LR and 66P are in the closed state (step S45). Upon receiving the information, the controller 81 displays, on the display 83, the information indicating that both the partitioning members 65LR and 66P are in the closed state. Having confirmed the information, the operator presses the automatic undocking start button of the operating device 82. In response to this operation, the controller 81 transmits an automatic undocking start signal to the controller 50.

Upon receiving the automatic undocking start signal (Yes in step S46), the controller 50 starts automatic undocking (step S47).

If it is determined in step S44 that the partitioning member 65LR or 66P is not in the closed state (No in step S44), the controller 50 transmits, to the controller 81 of the remote operation equipment 80, information indicating the partitioning member that is not in the closed state (step S51). Since the processes in steps S51 to S55 are the same as the processes in steps S11 to S15 of FIG. 9, a description thereof is omitted herein.

When automatic undocking is started in step S47, the controller 50 retracts the closure 63, and controls the travel device 10, the lifting/lowering device 8, and the cab rotator 6R to return the cab 6 to the predetermined standby position. When the cab 6 has returned to the predetermined standby position, the automatic undocking is completed (step S48), and the controller 50 ends the operating mode (step S49).

After the operating mode is ended in step S49, the controller 50 may control the opening/closing device 66D to bring the roll screen 66P installed on the rotunda 4 into the opened state. If the roll screen 66P is kept open, it is convenient for, for example, cleaning and inspection of the inside of the passenger boarding bridge 1.

It should be noted that an electric shutter may be installed instead of the electric roll screen 66. Further, an electric shutter may be installed instead of the electric double doors 65.

In the present embodiment, at the time of docking the cab 6 to the aircraft 3 and at the time of undocking the cab 6 from the aircraft 3, the operating mode is entered and the partitioning member 65LR installed on the cab 6 is brought into the closed state, which makes it possible to prevent a person from entering the outdoor region R1 on the distal end side of the cab 6 by mistake and falling therefrom. Moreover, by bringing the partitioning member 65LR installed on the cab 6 into the closed state, the outdoor region R1 and the indoor region R2 of the cab 6 can be partitioned off from each other, which makes it possible to prevent rainwater or the like from entering the indoor region R2.

Further, at the time of docking the cab 6 to the aircraft 3 and at the time of undocking the cab 6 from the aircraft 3, the operating mode is entered and the partitioning member 66P installed on the rotunda 4 is brought into the closed state, which makes it possible to prevent a person from entering the inside of the passenger boarding bridge 1 by mistake.

Since the present embodiment includes the opening/closing devices 65D and 66D, which open and close the respective partitioning members 65LR and 66P, it is not necessary to manually open or close the partitioning members 65LR and 66P. When the operating mode (first control mode) is entered, the opening/closing devices 65D and 66D are controlled to bring the partitioning members 65LR and 66P into the closed state, whereas when the automatic leveling mode (second control mode) is entered, the opening/closing devices 65D and 66D are controlled to bring the partitioning members 65LR and 66P into the opened state. Therefore, it is not necessary to perform an operation to open or close the partitioning members 65LR and 66P. This makes it possible to achieve labor savings.

In the present embodiment, when the operating mode is entered, in which the cab 6 can be moved to dock the cab 6 to and undock the cab 6 from the entrance of the aircraft 3, the partitioning members 65LR and 66P are brought into the closed state to close the walkways. Accordingly, if a person is present in the passenger boarding bridge 1, by means of the partitioning member 65LR installed on the walkway of the cab 6, the following situation can be prevented from occurring: the person enters the distal end side of the cab 6 by mistake and falls from the cab 6. Further, by means of the partitioning member 66P installed on the walkway of the rotunda 4, the following situation can be prevented from occurring: when the cab 6 of the passenger boarding bridge 1 is being moved, a person enters the inside of that passenger boarding bridge 1.

In the present embodiment, when the operating mode is entered, the controller 50 controls the opening/closing devices 65D and 66D to bring the partitioning members 65LR and 66P into the closed state. Here, immediately after the controller 50 has controlled the opening/closing devices 65D to bring the partitioning member 65LR into the closed state, if a person is detected by the human detector 112 when the opened/closed state detector 111 has not detected the closed state of the partitioning member 65LR, the controller 50 controls the opening/closing devices 65D to bring the partitioning member 65LR into the opened state. This makes it possible to prevent a situation where the person comes into contact with or gets caught in the partitioning member 65LR. Further, after the controller 50 has controlled the opening/closing devices 65D to bring the partitioning member 65LR into the closed state and the opened/closed state detector 111 has detected the closed state of the partitioning member 65LR, if a person is detected by the human detector 112, the controller 50 maintains the closed state of the partitioning member 65LR.

Similarly, immediately after the controller 50 has controlled the opening/closing device 66D to bring the partitioning member 66P into the closed state, if a person is detected by the human detector 114 when the opened/closed state detector 113 has not detected the closed state of the partitioning member 66P, the controller 50 controls the opening/closing device 66D to bring the partitioning member 66P into the opened state. This makes it possible to prevent a situation where the person comes into contact with or gets caught in the partitioning member 66P. Further, after the controller 50 has controlled the opening/closing device 66D to bring the partitioning member 66P into the closed state and the opened/closed state detector 113 has detected the closed state of the partitioning member 66P, if a person is detected by the human detector 114, the controller 50 maintains the closed state of the partitioning member 66P.

Further, not only in cases where the operating mode is entered as in steps S2 and S3 and step S42 and S43, but also in other cases where the operating device 32, 82, or the like is operated to control the opening/closing device(s) 65D or 66D to bring the partitioning member 65LR or 66P into the closed state, similar to the above, immediately after controlling the opening/closing device(s) 65D or 66D, if a person is detected by the human detector 112 or 114 when the opened/closed state detector 111 or 113 has not detected the closed state of the partitioning member 65LR or 66P, the controller 50 controls the opening/closing device(s) 65D or 66D to bring the partitioning member 65LR or 66P into the opened state. This makes it possible to prevent a situation where the person comes into contact with or gets caught in the partitioning member 65LR or 66P when the partitioning member 65LR or 66P is in the process of being closed.

In a case where driving by remote operation (manual driving or automatic driving by remote operation) is being performed, in the operating mode, if a person is detected by at least one of the human detectors 112 and 114, to ensure the safety of the person, the controller 50 may stop the operation of the mover (the lifting/lowering device 8, the travel device 10, and the cab rotator 6R) of the cab 6.

In the present embodiment, for example, a counter at the boarding gate or the remote operation equipment 80 may include a forced opening/closing operation switch to forcibly open and close the partitioning members 65LR and 66P. The forced opening/closing operation switch is configured to be communicable with the controller 50. In a case where the remote operation equipment 80 includes the forced opening/closing operation switch, the operating device 82 may include the forced opening/closing operation switch.

When a person performs a closing operation or an opening operation with the forced opening/closing operation switch, a forced opening/closing signal (specifically, a forced closing signal or a forced opening signal) is transmitted from the forced opening/closing operation switch to the controller 50. Upon receiving the forced opening/closing signal, regardless of whether the control mode is the operating mode or the automatic leveling mode, and regardless of the presence or absence of the control mode, the controller 50 controls the opening/closing devices 65D and 66D based on the forced opening/closing signal. For example, when a suspicious person is trying to enter the inside of the passenger boarding bridge 1 during the automatic leveling mode, the partitioning members 65LR and 66P can be closed by performing a closing operation with the forced opening/closing operation switch, and thereby the suspicious person can be prevented from entering the passenger boarding bridge 1 or the aircraft 3. It should be noted that a forced opening/closing operation switch corresponding to the partitioning member 65LR and a forced opening/closing operation switch corresponding to the partitioning member 66P may be installed separately.

Further, in the present embodiment, the human detector 114 installed on the rotunda 4 may be a camera with AI processing functions, and may include: an image capturer that captures, from the inside of the rotunda 4, an image of the interior of the fixed bridge 2 of the terminal building via the opening 4h of the rotunda 4; and an image determiner that analyzes the image captured by the image capturer and that determines whether or not there is a suspicious person coming toward the rotunda 4. For example, a rule may be set to prohibit running inside the terminal building or at least inside the fixed bridge 2, and a person running toward the rotunda 4 may be detected as a suspicious person. If there is a person running toward the rotunda 4, the image determiner may determine that there is a suspicious person. Further, for example, a photograph of the face of, for example, an internationally wanted criminal may be stored, and the image determiner may determine whether or not a person coming toward the rotunda 4 is the internationally wanted criminal. If it is determined that the person coming toward the rotunda 4 is the internationally wanted criminal, the image determiner may determine that there is a suspicious person.

If it is determined that there is a suspicious person coming toward the rotunda 4, the image determiner transmits a suspicious person detection signal to the controller 50. Upon receiving the suspicious person detection signal during the automatic leveling mode, the controller 50 controls the opening/closing devices 65D and 66D to bring the partitioning members 65LR and 66P into the closed state. This makes it possible to prevent the suspicious person from entering the passenger boarding bridge 1 or the aircraft 3. When driving by remote operation is being performed, upon receiving the suspicious person detection signal, the controller 50 may transmit a suspicious person detection signal to the remote operation equipment 80. Upon receiving the suspicious person detection signal, the controller 81 of the remote operation equipment 80 may display, on the display 83, a notification that there is a suspicious person, or may output an audio message, a warning sound, or the like from a speaker (not shown) to notify the operator of the presence of a suspicious person.

The present embodiment includes a passenger boarding bridge with a first configuration and a passenger boarding bridge with a second configuration as described below.

The passenger boarding bridge with the first configuration includes: a rotunda connected to a terminal building; a tunnel unit whose proximal end is connected to the rotunda, the tunnel unit being configured to be extendable and retractable in a longitudinal direction of the tunnel unit; a cab to be docked to and undocked from an aircraft, the cab being connected to a distal end of the tunnel unit; a mover that moves the cab; a controller that controls the mover; and a door closed state detector that detects a closed state of a door of the aircraft when the cab is in a state of being docked to the aircraft, wherein the controller is configured to: control the mover to move the cab from a predetermined standby position and to dock the cab to the aircraft; and then, after the door of the aircraft has temporarily been opened, when the door closed state detector detects the closed state of the door of the aircraft, determine that the cab is undockable; and control the mover to undock the cab from the aircraft and to move the cab to the standby position.

The passenger boarding bridge with the second configuration is configured such that the passenger boarding bridge with the first configuration further includes an undocking approval operating unit (undocking approval button 116) that is installed on the cab and that, when operated by a cabin crew member, transmits an undocking approval signal to the controller, wherein the controller is configured to, after the cab has been docked to the aircraft, determine that the cab is undockable in a case where, after the door of the aircraft has temporarily been opened and then the controller has received the undocking approval signal, the door closed state detector has detected the closed state of the door of the aircraft.

In each of the above passenger boarding bridges with the first configuration and the second configuration, after the cab has been docked to the aircraft, at the time of undocking the cab from the aircraft, without requiring an operation to be performed by an operator of the passenger boarding bridge, the controller determines that the cab is undockable, and controls the mover to undock the cab from the aircraft and to move the cab to the standby position. This makes it possible to achieve labor savings.

From the foregoing description, numerous modifications and other embodiments of the present invention are obvious to those skilled in the art. Accordingly, the foregoing description is to be construed as illustrative only, and is provided for the purpose of teaching those skilled in the art the best mode for carrying out the present invention. The structural and/or functional details may be substantially modified without departing from the scope of the present invention.

### Industrial Applicability

The present invention is useful as, for example, a passenger boarding bridge that makes it possible to achieve labor savings.

### Reference Signs List

- 1: passenger boarding bridge
- 2: fixed bridge of a terminal building
- 3: aircraft
- 3a: door of the aircraft
- 4: rotunda
- 5: tunnel unit
- 6: cab
- 6R: cab rotator (mover)
- 8: lifting/lowering device (mover)
- 10: travel device (mover)
- 50: controller
- 65L, 65R: double doors (partitioning member)
- 65D: opening/closing device to open and close the double doors
- 66P: roll screen (partitioning member)
- 66D: opening/closing device to open and close the roll screen
- 111, 113: opened/closed state detector
- 112, 114: human detector

## Claims

1. A passenger boarding bridge comprising:
a rotunda connected to a terminal building, the rotunda including a walkway therein;
a tunnel unit whose proximal end is connected to the rotunda, the tunnel unit being configured to be extendable and retractable in a longitudinal direction of the tunnel unit, the tunnel unit including a walkway therein;
a cab connected to a distal end of the tunnel unit, the cab including a distal end part to be docked to and undocked from an entrance of an aircraft, the cab further including a walkway therein;
a mover that moves the cab;
a controller that performs control in a first control mode and a second control mode, the first control mode being a mode in which, based on an operation signal resulting from an operation by an operator, the controller controls the mover to move the cab to an intended position, the second control mode being a mode in which the controller controls the mover such that the cab that has been docked to the entrance of the aircraft moves in a manner to follow upward/downward movement of the entrance of the aircraft;
a partitioning member installed on the walkway of at least one of the cab or the rotunda, wherein when the partitioning member is in an opened state, the partitioning member opens the walkway, and when the partitioning member is in a closed state, the partitioning member closes the walkway; and
an opening/closing device that opens and closes the partitioning member, wherein:
when the control enters the first control mode, the controller controls the opening/closing device to bring the partitioning member into the closed state; and
when the control enters the second control mode, the controller controls the opening/closing device to bring the partitioning member into the opened state.

2. The passenger boarding bridge according to claim 1, further comprising:
an opened/closed state detector that detects the opened state and the closed state of the partitioning member; and
a human detector that detects a person within a predetermined range including an installation position of the partitioning member, wherein
immediately after the controller in the first control mode has controlled the opening/closing device to bring the partitioning member into the closed state,
if a person is detected by the human detector when the opened/closed state detector has not detected the closed state of the partitioning member, the controller controls the opening/closing device to bring the partitioning member into the opened state, whereas
if a person is detected by the human detector after the opened/closed state detector has detected the closed state of the partitioning member, the controller maintains the closed state of the partitioning member.

3. The passenger boarding bridge according to claim 1 or 2, wherein:
upon receiving a mode control canceling signal to cancel control of the opening/closing device that is based on the first control mode, the controller cancels the control of the opening/closing device that is based on the first control mode, then receives an opening/closing operation signal to open or close the partitioning member, and controls the opening/closing device based on the received opening/closing operation signal; and
upon receiving a mode control canceling signal to cancel control of the opening/closing device that is based on the second control mode, the controller cancels the control of the opening/closing device that is based on the second control mode, then receives an opening/closing operation signal to open or close the partitioning member, and controls the opening/closing device based on the received opening/closing operation signal.

4. The passenger boarding bridge according to any one of claims 1 to 3, wherein
upon receiving a forced opening/closing signal that gives an instruction to forcibly open or close the partitioning member, the controller controls the opening/closing device based on the forced opening/closing signal regardless of the first control mode and the second control mode.

5. The passenger boarding bridge according to any one of claims 1 to 4, wherein:
an interior of the cab is segmented into an outdoor region and an indoor region, the outdoor region being located on a distal end part side of the cab, the indoor region being located on a tunnel unit side of the cab;
the cab includes an opening via which the outdoor region and the indoor region communicate with each other and that serves as the walkway; and
the partitioning member is installed at the opening of the cab.

6. The passenger boarding bridge according to any one of claims 1 to 5, wherein:
the rotunda includes an opening that faces the terminal building and that serves as the walkway; and
the partitioning member is installed at the opening of the rotunda.

7. The passenger boarding bridge according to claim 1, wherein:
an interior of the cab is segmented into an outdoor region and an indoor region, the outdoor region being located on a distal end part side of the cab, the indoor region being located on a tunnel unit side of the cab;
the cab includes an opening via which the outdoor region and the indoor region communicate with each other and that serves as the walkway;
the rotunda includes an opening that faces the terminal building and that serves as the walkway; and
the partitioning member is installed at the opening of the cab and at the opening of the rotunda,
the passenger boarding bridge further comprising:
an image capturer that is installed on the rotunda and that captures, from inside of the rotunda, an image of an interior of the terminal building via the opening of the rotunda; and
an image determiner that analyzes the image captured by the image capturer and that determines whether or not there is a suspicious person coming toward the rotunda, wherein
during the second control mode, if the image determiner determines that there is a suspicious person coming toward the rotunda, the controller controls the opening/closing device such that the partitioning member in the opened state is brought into the closed state.
